# EUROPEAN PATENT SPECIFICATION

(11) **EP 3 183 158 B1**
(45) Date of publication and mention of the grant of the patent: **19.05.2021**
(21) Application number: 15753129.4
(22) Date of filing: 13.08.2015
(51) Int. Cl.: B61L 25/02, B61D 43/00

(54) **AN AXLE GENERATOR FOR A BRAKE SYSTEM OF A RAILWAY VEHICLE**
ACHSGENERATOR FÜR EIN BREMSSYSTEM EINES EISENBAHNFAHRZEUGS
GÉNÉRATEUR D'ESSIEU POUR UN SYSTÈME DE FREINAGE D'UN VEHICULE FERROVIAIRE

(30) Priority: 22.08.2014 GB 201414985
(43) Date of publication of application: 28.06.2017
(73) Proprietor: Knorr-Bremse Rail Systems (UK) Limited, Hampton Park East Melksham Wiltshire SN12 6TL (GB)
(72) Inventor: BRADLEY, Ross, Melksham Wiltshire SN12 6TL (GB); MIFLIN, Rodney, Melksham Wiltshire SN12 6T (GB)
(74) Representative: Moore, David Simon
(86) International application number: PCT/GB2015/000237
(87) International publication number: WO 2016/027044

(56) References cited:
- GB-A- 1 123 127
- GB-A- 1 458 968
- GB-A- 1 458 968
- US-A- 5 488 287

## Description

The invention relates to an axle generator for a brake system for a railway vehicle incorporating wheel slide protection.

Railway vehicle braking systems are typically air brakes. Such systems incorporating wheel slide control and wheel spin control have established themselves in recent years in the passenger train market. Both wheel slide and wheel spin stem from low wheel to rail adhesion. Wheel slide typically occurs when braking a railway car and is a major cause of wheel damage, which in turn can lead to track damage.

A typical wheel slide control system comprises a sensor on each axle of the vehicle, which measure the speed of rotation of the axle. The sensors are individually wired back to a central vehicle brake control unit. In use, the outputs of the sensors are then fed to the brake control unit, which compares the values with those of adjacent axles and if the difference exceeds a pre-determined limit, releases and re-applies the brake pressure until the axle speed falls within acceptable limits. This system has proven itself in practice and leads to improved braking performance and reduces the probability of damage to wheels and track. The problem of damage to wheels is particularly severe on freight trains, which as a consequence tend to travel more slowly than would otherwise be possible.

Freight vehicles generally have large brake cylinders. This leads to a number of problems, in particular in relation to the relatively large volumes of air that need to be released during wheel slide operation requiring the use of high flow valves.

Most freight wagons do not have an autonomous electrical power supply, which effectively has prevented the widespread adoption of wheel slide protection in freight trains. Consequently, freight trains tend to travel much more slowly than passenger trains to avoid track damage, in particular that caused by wheel flats caused by wheel slide events.

US5488287 (Keschwari) discloses a method of producing electrical energy from the rotary motion of an axle by coupling a generator to the axle. The arrangement has a rotor coupled to the axle with permanent magnets distributed over the circumference and a stator provided with induction coils and an electronic unit for evaluating function. Before being supplied to a rectifier, the direct three phase output of the stator is taken up in parallel and is supplied to an arrangement of optical couplers, which are arranged in such a way that the optical couplers are always arranged between two phases with one of the couplers handling the upper half-wave and one the lower half-wave. Before being supplied to the electronic control unit the signal is supplied through an Rc section, Schmitt trigger and monostable multi-vibrator to ensure that spurious signals are kept away from the ECU. The disclosed arrangement provides six pulse width signals appropriately offset with respect to time and are finally combined in a logical unit and co-ordinated and evaluated with respect to time. The proposed solution enables an evaluation of the rate of rotation after a sixth of a revolution of a wheel, which is of particular relevance when used in a wheel slide protection system.

This arrangement has proved to be not particularly efficient and requires careful alignment of the parts on the axle end. The solution in this document is difficult to implement, can only be used with an axle box and requires making the axle itself into a generator, which may be unreliable.

The present invention seeks to provide an axle end generator which can be used for both power generation and for speed sensing for use in a railway braking system that is more reliable and lower cost than the existing known solutions.

According to the invention there is provided an axle generator assembly for a brake system for a railway vehicle in accordance with the features of Claim 1. Preferably, both phases are used to determine direction of the railway vehicle.

Preferably, the motor comprises a stepper motor, in particularly having at least 6 steps, more preferably a greater number of steps. Preferably, the frequency response of the frequency detection circuitry is filtered to limit the expected frequency resulting from the speed of the axle.

The invention advantageously uses a two phase stepper motor in which both phases are used for generation but one or both phases are used for frequency detection. As the two phases are out of phase with one another, it is also possible to determine direction with the solution of the invention.

In the solution according to the invention, there is no internal source of spurious signals so the protection is primarily for induced signals from external influences. These are primarily EMI or EMC and can be significantly limited by the impedance of the rectification section. The solution according to the invention advantageously dispenses with the opto-isolators of the prior art solution thereby enabling a significant simplification of the circuitry as no galvanic isolation is required. The filtering arrangement further enables the pulse rejection circuitry to be dispensed with. The use of the stepper motor enables the speed of rotation to be evaluated much more quickly than in the prior art.

Exemplary embodiments will now be described in greater detail with reference to the drawings in which:
Fig. 1 shows a first coupling arrangement
Fig. 2 shows schematically an electrical block diagram

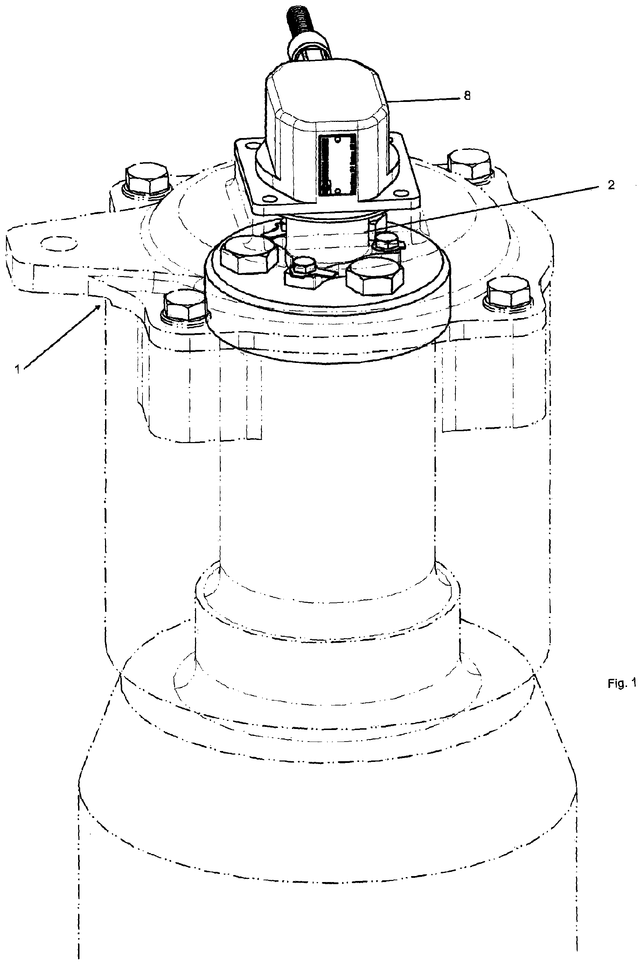

Figure 1 shows a first coupling arrangement suitable for a generic axlebox having exterior bearings comprising an axle coupling hub 1 adapted to be fixed to the axle hub having an axial opening adapted to receive a generally cylindrical coupling element 2. The coupling hub 1 comprises a first part a rigidly connected to the axle end and a second part rotatably connected to the part a. The coupling element 2 is provided with a generally rectangular opening at its end remote from the axle, which rectangular opening is slightly recessed from the surface of the end.

The rectangular opening is adapted to receive a peg, which peg is rigidly and rotatably connected with the generator 8. The generator 8 comprises a two phase stepper motor. The peg is adapted to engage the drive shaft in the generator 8 so as to produce electricity when in motion.

In use, either or both of the two phases can be rectified to power the brake system and the frequency of one or both phases can be used by the braking ECU to determine the speed of the vehicle. As the phases are offset from one another, the two phases can also be used to determine the direction of the vehicle.

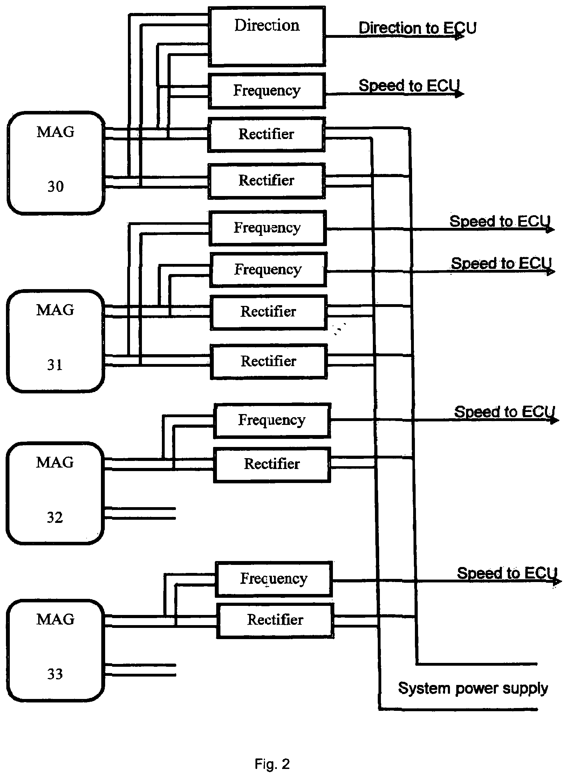

Fig. 2 shows schematically an electrical block diagram with four axle end generators, 30, 31, 32 and 33. Each of the axle end generators has two pairs of outputs which represent the two phases and each is representative of a possible different configuration depending on system requirements. In general only one axle end generator is required per axle. The axle-end generator comprises a 200 step stepper motor providing 50 pulses per revolution. In principle this enables an instantaneous speed determination at 1/50 of a revolution, which is significantly faster than the prior art solutions.

With axle end generator 30 both outputs are rectified to generate power for the brake system and the direction is taken by analysing the respective phases by the braking ECU (not shown). The frequency is taken from only one of the outputs to provide an indication of vehicle speed, which again can be determined by the ECU. The frequency conversion uses a differential amplifier with a limited bandwidth, the output of which is then Schmitt triggered to provide a square wave form for further processing. The direction can then be extracted by taking this square wave form of both phases and putting these into a D-type flip flop.

With axle end generator 31, again both outputs are rectified to generate power for the brake system and the frequency is taken from both of the outputs to provide an indication of the axle speed.

With axle end generators 32 and 33, only one of the outputs is rectified to generate power and the frequency is also taken from only one of the outputs to provide an indication of the axle speed.

The frequency response of the frequency detection circuit is limited to the expected frequency relating to the maximum axle speed.

## Claims

1. Axle generator assembly for a brake system for a railway vehicle comprising a motor (8,30) adapted to be driven from an axle end (2) of a freight wagon, **characterised in that** the motor is a two phase motor, such that both phases can be rectified by a rectification section to generate power for the brake system, wherein the rectification section has an impedance, which impedance provides protection from induced signals from sources external to the axle generator assembly and the assembly further comprising frequency detection circuitry to detect the frequency of the phases without pulse rejection circuitry, wherein the frequency of one or both of said phases is used to generate a speed signal, wherein the axle generator assembly comprises a differential amplifier with a limited bandwidth, the output of which is then Schmitt triggered to provide a square wave form for further processing.

2. Axle generator assembly according to Claim 1, configured to determine the direction of the railway vehicle based on both phases.

3. Axle generator assembly according to Claim 1 or Claim 2, wherein the motor comprises a stepper motor(8,30).

4. Axle generator assembly according to Claim 3, wherein the motor has at least 10 steps.

5. Axle generator assembling according to any one of Claims 1 to 4, wherein the frequency response of the frequency detection circuitry is filtered to limit the frequency response related to the maximum axle speed.to the expected bandwidth of the generator.

6. Axle generator assembly according to any one of Claims 1 to 5, wherein the frequency is taken from only one of the outputs to provide an indication of vehicle speed, which again is determined by an ECU.

7. Axle generator assembly according to any one of Claims 1 to 6, wherein the direction can then be extracted by taking this square wave form of both phases and putting these into a D-type flip flop.

## Patentansprüche

1. Achgenerator-Baugruppe für eine Bremsanlage für ein Eisenbahnfahrzeug, umfassend einen Motor (8, 30), der zum Antrieb von einem Achsstummel (2) eines Güterwagens aus ausgelegt ist, **dadurch gekennzeichnet, dass** der Motor ein Zweiphasenmotor ist, so dass beide Phasen von einem Gleichrichtungsabschnitt zur Krafterzeugung für die Bremsanlage gleichgerichtet werden können, wobei der Gleichrichtungsabschnitt einen Scheinwiderstand hat, der Schutz gegen Signale bietet, die aus außerhalb der Achgenerator-Baugruppe liegenden Quellen eingeleitet werden, und wobei die Baugruppe eine Frequenzdetektionsschaltung zur Detektion der Frequenz der Phasen ohne Impulsunterdrückungsschaltung umfasst, wobei die Frequenz von einer oder beiden der besagten Phasen zur Erzeugung eines Geschwindigkeitssignals eingesetzt wird, wobei die Achgenerator-Baugruppe einen Differenzialverstärker mit begrenzter Bandbreite umfasst, dessen Ausgang dann einem Schmitt-Trigger unterzogen wird, um eine Rechteckwellenform zur weiteren Verarbeitung bereitzustellen.

2. Achgenerator-Baugruppe nach Anspruch 1, zur Bestimmung der Richtung des Eisenbahnfahrzeugs auf der Basis beider Phasen ausgelegt.

3. Achgenerator-Baugruppe nach Anspruch 1 oder Anspruch 2, wobei der Motor einen Schrittmotor (8, 30) umfasst.

4. Achgenerator-Baugruppe nach Anspruch 3, wobei der Motor mindestens zehn Schritte hat.

5. Achgenerator-Baugruppe nach einem der Ansprüche 1 bis 4, wobei der Frequenzgang der Frequenzdetektionsschaltung gefiltert wird, um den mit der maximalen Achsdrehzahl verbundenen Frequenzgang auf die erwartete Bandbreite des Generators zu begrenzen.

6. Achgenerator-Baugruppe nach einem der Ansprüche 1 bis 5, wobei die Frequenz nur einem der Ausgänge entnommen wird, um eine Anzeige der von einem ESG bestimmten Fahrzeuggeschwindigkeit bereitzustellen.

7. Achgenerator-Baugruppe nach einem der Ansprüche 1 bis 6, wobei die Richtung dann durch Entnehmen der besagten Rechteckwellenform beider Phasen und deren Einsetzen in ein D-Flipflop abgeleitet werden kann.

## Revendications

1. Ensemble de générateur d'essieu pour un système de frein pour un véhicule ferroviaire comprenant un moteur (8, 30) adapté à être entraîné depuis une extrémité d'essieu (2) d'un wagon de fret, **caractérisé en ce que** le moteur est un moteur diphasé de sorte que les deux phases peuvent être redressées par une section de redressement pour générer de la puissance pour le système de frein, dans lequel la section de redressement a une impédance, laquelle impédance fournit une protection contre des signaux induits provenant de sources externes à l'ensemble de générateur d'essieu et l'ensemble comprenant en outre une circuiterie de détection de fréquence pour détecter la fréquence des phases sans circuiterie de rejet d'impulsion, dans lequel la fréquence d'une desdites phases ou des deux est utilisée pour générer un signal de vitesse, dans lequel l'ensemble de générateur d'essieu comprend un amplificateur différentiel avec une largeur de bande limitée dont la sortie est ensuite soumise à une bascule de Schmitt pour fournir une forme d'onde carrée pour traitement supplémentaire.

2. Ensemble de générateur d'essieu selon la revendication 1, configuré pour déterminer la direction du véhicule ferroviaire en fonction des deux phases.

3. Ensemble de générateur d'essieu selon la revendication 1 ou la revendication 2, dans lequel le moteur comprend un moteur pas à pas (8, 30).

4. Ensemble de générateur d'essieu selon la revendication 3, dans lequel le moteur a au moins 10 pas.

5. Ensemble de générateur d'essieu selon l'une quelconque des revendications 1 à 4, dans lequel la réponse en fréquence de la circuiterie de détection de fréquence est filtrée pour limiter la réponse en fréquence liée à la vitesse d'essieu maximale à la largeur de bande attendue du générateur.

6. Ensemble de générateur d'essieu selon l'une quelconque des revendications 1 à 5, dans lequel la fréquence est prélevée d'une seule des sorties pour fournir une indication de vitesse de véhicule, qui est de nouveau déterminée par un bloc de commande électronique.

7. Ensemble de générateur d'essieu selon l'une quelconque des revendications 1 à 6, dans lequel la direction peut ensuite être extraite en prenant cette forme d'onde carrée des deux phases et mettant celles-ci dans un circuit bistable de type D.
